# EUROPEAN PATENT SPECIFICATION

(11) **EP 3 919 604 B1**
(45) Date of publication and mention of the grant of the patent: **05.04.2023**
(21) Application number: 19919413.5
(22) Date of filing: 03.09.2019
(51) Int. Cl.: C12C 12/02

(54) **HEALTHY LIGHT BEER AND PREPARATION METHOD THEREFOR**
GESUNDES LEICHTES BIER UND HERSTELLUNGSVERFAHREN DAFÜR
BIÈRE LÉGÈRE SAINE ET PROCÉDÉ DE PRÉPARATION ASSOCIÉ

(30) Priority: 13.03.2019 CN 201910188877
(43) Date of publication of application: 08.12.2021
(73) Proprietor: Tsingtao Brewery Co., Ltd., Shibei District Qingdao, Shandong 266000 (CN)
(72) Inventor: YIN, Hua, Qingdao, Shandong 266000 (CN); DONG, Jianjun, Qingdao, Shandong 266000 (CN); XING, Lei, Qingdao, Shandong 266000 (CN); CHANG, Zongming, Qingdao, Shandong 266000 (CN); QIAN, Zhonghua, Qingdao, Shandong 266000 (CN); HUANG, Shuli, Qingdao, Shandong 266000 (CN); HU, Xiaocong, Qingdao, Shandong 266000 (CN); LIU, Xiaolin, Qingdao, Shandong 266000 (CN); WANG, Jianfeng, Qingdao, Shandong 266000 (CN); YANG, Zhaoxia, Qingdao, Shandong 266000 (CN)
(74) Representative: J A Kemp LLP
(86) International application number: PCT/CN2019/104128
(87) International publication number: WO 2020/181742

(56) References cited:
- CN-A- 101 948 719
- CN-A- 108 865 550
- CN-A- 109 135 977
- CN-A- 109 135 985
- CN-A- 109 706 017
- CN-A- 109 852 501
- JP-A- 2006 325 561
- RU-C1- 2 406 754
- Boulton Christopher ET AL: "Original gravity" In: "Encyclopaedia of Brewing", 5 August 2013 (2013-08-05), XP055901894, pages 444-446, * page 445 *
- LIN JIAN ET AL: "Fed-batch fermentation with glucose syrup as an adjunct for high-ethanol beer brewing : High-ethanol beer brewing with glucose syrup", JOURNAL OF THE INSTITUTE OF BREWING., June 2014 (2014-06), pages n/a-n/a, XP055901123, GB ISSN: 0046-9750, DOI: 10.1002/jib.147
- Xieen Run: "Main Beer Barley Varieties At Home and Abroad", Malt preparation technology, 30 September 2012 (2012-09-30), pages 18-22, XP009523123, ISBN: 978-7-5019-8828-0

## Description

### TECHNICAL FIELD

The present application belongs to the technical field of beer, particularly it relates to a healthy type light beer and preparation method thereof.

### BACKGROUND

In recent years, with people's pursuit of a healthy lifestyle, the health claim on the beer products is also increasingly high, and some light beer products with low carbohydrate (content of carbohydrate is 1 g/100ml~2 g/100ml) and low calorie (100 kJ/100ml~115 kJ/100ml) appear.

At present, generally, there are two production methods for the low carbohydrate beer in the international market; the first method is: increasing dilution rate, and reducing original wort gravity to 6∼7.5 °P, thereby achieving the purpose of reducing carbohydrate and calorie, but such reduced original wort gravity and increased dilution rate result in decrease of flavor compounds and alcohol gravity in beer, such that watery sense and lightness of beer are stronger, and drinkability of beer is reduced; the second method is: increasing the dilution rate and reducing the original wort gravity, meanwhile at a wort preparation stage adding a large amount of exogenous glucoamylase, to achieve a high fermentation degree, thus achieving high alcohol gravity, thereby reducing the watery sense and lightness due to decrease of the original wort gravity.

Therefore, there is no a light beer on the market which can achieve low calorie and low carbohydrate, meanwhile compared with common Lager beer, the mouth feel has no watery sense, and drinkability is good, thereby further satisfying consumers' consumption demand.

JP2006325561A provided a fermented beverage, especially a low-glucide and/or low-calorie beer-taste fermented beverage.

CN109135985A provideed hops fragrance type wholewheat Pilsner beer and a preparation method thereof.

LIN JIAN ET AL: "Fed-batch fermentation with glucose syrup as an adjunct for high-ethanol beer brewing : High-ethanol beer brewing with glucose syrup", JOURNAL OF THE INSTITUTE OF BREWING., 1 June 2014(2014-06-01) disclosed a fed-batch fermentation with glucose syrup as an adjunct for high-ethanol beer brewing.

### SUMMARY

The present application proposed a healthy type light beer and preparation method thereof, the beer is close to common Lager beer in terms of flavor compounds, alcohol gravity, mouth feel, meanwhile it also has a characteristic of low calorie and low carbohydrate, thereby solving the current situation of absence of healthy type light beer in domestic.

In order to achieve the above purpose, the present application provides a healthy type light beer, the beer is prepared by using a recipe comprising barley malt, wheat malt and caramel malt with addition of high RDF syrup, through bottom fermentation method, the high RDF syrup has a RDF ≥ 89%, the beer is of an original wort gravity 7.0~7.5 °P, an alcohol gravity ≥ 4 %vol, carbohydrate ≤ 1.2 g/100ml, calorie ≤ 112 kJ/100ml, RDF ≥ 84% and bitterness unit 5∼6.5 IBU; a content of total higher alcohols in the beer is 40∼60mg/L, a content of total ester in the beer is 10∼18mg/L.

Preferably, the barley malt is mainly malt of Australian malt and Canadian malt, and the barley malt accounts for 39%∼54.5% of the total recipe, the wheat malt accounts for 5%∼10% of the total recipe, the caramel malt accounts for 0.5%∼1% of the total recipe, and the high RDF syrup accounts for 40%∼50% of the total recipe.

Preferably, the high RDF syrup is fructose corn syrup or glucose syrup.

The present application also provides a preparation method for the healthy type light beer as described in the abovementioned technical solutions, comprising the following steps:
milling barley malt, wheat malt and caramel malt, then mixing at a ratio of material to water of 1:3∼1:4, and conducting two-stage saccharification at 62∼72 °C;
after the saccharification, filtering saccharified mash at 73±1°C, to obtain clear wort, and then boiling the clear wort; during the boiling process, adding hops or hop extracts in batches; after boiling adding the high RDF syrup of 40∼50%; boiling is continued, and then conducting whirlpool, cooling to 8∼12 °C, meanwhile conducting aeration and then pitching lager yeast to conduct fermentation, to obtain a cellar beer;
filtering the cellar beer then diluting to 7∼7.5 °P, packaging and sterilizing, to obtain a healthy type light beer.

Preferably, the two-stage saccharification comprises a first stage saccharification of 80-100 min at 62∼65 °C, and a second-stage saccharification of 20∼40 min at 71∼73 °C.

Preferably, the step adding hops or hop extracts in batches during the boiling process specifically comprises:
adding the hops or the hop extracts at the beginning of boiling, 15 min after boiling and 60 min after boiling.

Preferably, the hops or the hop extracts is bitter hops, aroma hops or dual-purpose hops.

Preferably, the step conducting aeration and pitching of lager yeast to conduct fermentation specifically comprises:
conducting aeration for wort obtained after the whirlpool and cooling, controlling a dissolved oxygen in the wort at 10∼14 mg/L, meanwhile pitching the lager yeast, and controlling yeast pitching rate at 20∼30 million/ml, a main fermentation temperature at 8∼12 °C, a maturation temperature at 8∼13 °C, a fermentation time ≥ 15 days, a cold storage temperature -2 °C~0 °C, and a cold storage time ≥ 4 days.

Compared with the prior art, the advantages and positive effects of the present application lie in:
the healthy type light beer provided by the present application use the barley malt, the wheat malt and the caramel malt with the addition of the high real degree of fermentation syrup, and it is prepared by the bottom fermentation method. The prepared beer is close to common Lager beer in terms of flavor ingredients, alcohol gravity, mouth feel, and its mouth feel is refreshing and easy-drinking, besides it also has a characteristic of low calorie and low carbohydrate, thereby solving the current situation of absence of healthy type light beer in domestic.

### DETAILED DESCRIPTION

Hereinafter, technical solutions in the implementations of the present application will be described clearly and completely. Obviously, the described implementations are merely part of the embodiments of the present application, rather than all of the implementations. On the basis of the implementations in the present application, all other implementations obtained by those of ordinary skill in the art without inventive works, fall within the protection scope of the present application.

One implementation of the present application provides a healthy type light beer, the beer is prepared by using a recipe comprising barley malt, wheat malt and caramel malt with addition of high real degree of fermentation (hereinafter referred to as RDF) syrup through bottom fermentation method, and an original wort gravity of the beer is 7.0~7.5 °P, an alcohol gravity ≥4vol%, carbohydrate ≤1.2 g/100ml, calorie ≤112 kJ/100ml, RDF ≥ 84% and bitterness unit 5∼6.5 IBU; a content of total higher alcohols in the beer is 40∼60mg/L, a content of total ester in the beer is 10∼18mg/L.

The healthy type light beer provided by the above implementation preferred use a combination of malt, with addition of the high RDF syrup, such that the physicochemical indexes and mouth feel and flavor of the obtained beer is up to reference wine flavor, meanwhile consumer demand of domestic people is satisfied. Wherein, the malt preferably comprises barley malt, wheat malt and caramel malt, wherein, the barley malt is mainly malt of Australian malt and Canadian malt, and the barley malt accounts for 39%∼54.5% of the total recipe, the wheat malt accounts for 5%∼10% of the total recipe, the caramel malt accounts for 0.5%~1% of the total recipe, and the high RDF syrup accounts for 40%∼50% of the total recipe; for the syrup, a high RDF syrup with RDF ≥ 89% is selected, i.e., fructose corn syrup or glucose syrup. Furthermore, in the recipe of the beer, auxiliary materials such as rice and corn are not required, and according to the specified requirements on wort gravity, bitterness unit, wort limit fermentation degree, the healthy type light beer can be prepared in which the physicochemical indexes conform to the requirements, i.e. calorie ≤112 kJ/100ml, alcohol gravity being between 4.0~4.2%, mouth feel being refreshing and easy-drinking, and having the characteristic of low carbohydrate and low calorie.

Here, it should be noted that the total higher alcohols and the total ester are important flavor compounds in beer that help to reduce bland tasting of the beer. For Light beer, its original wort gravity is lower than common beer; accordingly the total higher alcohols and the total ester should be equivalent to the common beer, or higher than the common beer, which can help to achieve the characteristic of strong taste of low alcoholic liquor for Light beer.

The implementations of the present application also provide a preparation method for the healthy type light beer according to the above implementations; the method comprises the following steps:
S1: barley malt, wheat malt and caramel malt are milled, then mixed at a ratio of material to water (i.e., ratio of a total mass of the barley malt, the wheat malt and the caramel malt to mass of water) of 1:3∼1:4, and two-stage saccharification is conducted at 62∼72 °C;
   in this step, it is required to smash each malt thoroughly then mix with water at a ratio of 1:3~1:4, to ensure full use of the malt. Furthermore, in this step, the saccharification process is preferred the two-stage saccharification, which can ensure decomposition of starch, and contributes to controlling wort limit fermentation degree.
S2: after the saccharification, saccharified mash is filtered at 73±1 °C to obtain clear wort, and then the clear wort is boiled; during boiling process, hops or hop extracts is added in batches; after boiling, 40~50% of the high RDF syrup is added; boiling is continued, and then whirlpool is conducted; temperature is cooled to 8~12°C; aeration is conducted, meanwhile lager yeast is pitched to conduct fermentation, then a cellar beer is obtained;
   in this step, the saccharified mash is filtered in order to ensure the suspended matters in the saccharified mash to be thoroughly precipitated and separated. Furthermore, in order to ensure full use of the hop matter, the hops or the hop extracts is added adopting fractional addition, preferably the hops or the hop extracts is added at the beginning of boiling, 15 min after boiling and 60 min after boiling respectively; after adding the hops or the hop extracts and boiling, the high RDF syrup accounting for 40~50% of total recipe is added and thoroughly mixed, then the whirlpool is conducted, the cyclotron time can be adjusted properly according to the effect of swirling, preferably 20 min-30 min, and a wort gravity of wort obtained at this time is 16~18°P.
S3: the cellar beer is filtered and then diluted to 7∼7.5 °P, packaged and sterilized, and a healthy type light beer is obtained.

At this step, finally the cellar beer is filtered and diluted, and a beer with an original wort gravity of 7.0~7.5 °P is obtained.

In one preferred implementation, the two-stage saccharification comprises a first stage saccharification of 80-100 min at 62~65 °C, and a second-stage saccharification of 20-40 min at 71-73 °C. In this implementation, the preferred two-stage saccharification process not only ensures the decomposition of starch, but also contributes to the control on wort limit fermentation degree.

In one preferred implementation, the hops or the hop extracts is bitter hops, aroma hops or dual-purpose hops. It's understandable that, the present implementation is not limited to the above types of hops, provided that the hops has good bitterness coordination and contributes to the final beer product having the characteristic of refreshing, easy-drinking and strong taste of low alcoholic liquor.

In one preferred implementation, the step conducting aeration and pitching lager yeast to conduct fermentation specifically comprises:
aeration of wort obtained after the whirlpool and cooling is conducted, a dissolved oxygen in the wort is controlled at 10~14mg/L, meanwhile the lager yeast is inoculated, and yeast pitching rate is controlled at 20~30 million/ml, a main fermentation temperature at 8~12°C, a maturation temperature 8~13°C, a fermentation time ≥ 15 days, a cold storage temperature -2°C~0°C, a cold storage time ≥ 4 days. In this implementation, the parameters involved in the step of conducting aeration and pitching the lager yeast to conduct fermentation are restricted, to ensure the product obtained after the fermentation is the expected product. It's understandable that, the restriction on above parameters can be slightly adjusted within the above restricted range according to actual production status.

The healthy type light beer obtained by the above implementations has an alcohol gravity ≥ 4 vol%, carbohydrate ≤1.2g/100ml, calorie ≤112kJ/100ml, RDF ≥84%, bitterness unit 5~6.5IBU. The physicochemical indexes can reach level of the reference beer; the mouth feel is refreshing and easy-drinking. Furthermore, the beer has low calorie and low carbohydrate without affecting the mouth feel, it can meet the pursuit of mouth feel of domestic people, meanwhile find a balance between "health" and "pleasure", so as to greatly satisfy the consumers' requirement.

In order to introduce the healthy type light beer provide by the implementations of the present application and its preparation method more clearly and in more detail, the following will be described in combination with specific embodiments.

### Embodiment 1

Barley malts (Australian malt 20%, Canadian malt 20%, wheat malt 9%, caramel malt 1%) and water as raw materials, undergoing milling ---+ saccharification ---+ filtration ---+ boiling (adding hops in three times, and then boiling, adding 50% high RDF syrup till a saccharified wort gravity is 18 °P) ---+ whirlpool ---+ cooling ---+ aeration →pitching of lager yeast ---+ fermentation ---+ filtration → sterilization → obtaining a healthy type light beer of 7.5 °P.

### Embodiment 2

Barley malts (Australian malt 30%, Canadian malt 22%, wheat malt 7%, caramel malt 1%) and water as raw materials, undergoing milling ---+ saccharification ---+ filtration ---+ boiling (adding hops in three times, and then boiling, adding 40% high RDF syrup till a saccharified wort gravity is 18 °P) ---+ whirlpool ---+ cooling ---+ aeration →pitching of lager yeast ---+ fermentation → filtration → sterilization → obtaining a healthy type light beer of 7.5 °P.

### Embodiment 3

Barley malts (Australian malt 20%, Canadian malt 20%, wheat malt 9%, caramel malt 1%) and water as raw materials, undergoing milling ---+ saccharification ---+ filtration ---+ boiling (adding hops in three times, and then boiling, adding 50% high RDF syrup till a saccharified wort gravity is 18°P) ---+ whirlpool → cooling → aeration →pitching of lager yeast → fermentation ---+ filtration → sterilization → obtaining a healthy type light beer of 7.0 °P.

### Embodiment 4

Barley malts (Australian malt 34.5%, Canadian malt 20%, wheat malt 5%, caramel malt 0.5%) and water as raw materials, undergoing milling → saccharification → filtration → boiling (adding hops in three times, and then boiling, adding 40% high RDF syrup till a saccharified wort gravity is 16 °P) ---+ whirlpool ---+ cooling ---+ aeration →pitching of lager yeast ---+ fermentation ---+ filtration ---+ sterilization ---+ obtaining a healthy type light beer of 7.5 °P.

### Embodiment 5

Barley malts (Australian malt 19%, Canadian malt 20%, wheat malt 10%, caramel malt 1%) and water as raw materials, undergoing milling → saccharification ---+ filtration ---+ boiling (adding hops in three times, and then boiling, adding 50% high RDF syrup till a saccharified wort gravity is 18°P) ---+ whirlpool ---+ cooling ---+ aeration →pitching of lager yeast ---+ fermentation ---+ filtration ---+ sterilization ---+ obtaining a healthy type light beer of 7.0 °P.

### Physical and chemical testing of the healthy type light beer

**Table 1. Partial physical and chemical testing results of the raw materials used in Embodiments 1∼5**

| Testing items | Australian malt | Canadian malt | Wheat malt | Caramel malt | High RDF syrup |
|---|---|---|---|---|---|
| Limit fermentation degree % | 68.5 | 69 | 68 | 69 | 89 |

**Table 2. Physical and chemical testing results of the wort obtained in Embodiments 1∼5**

| Testing items | Embodiment 1 | Embodiment 2 | Embodiment 3 | Embodiment 4 | Embodiment 5 |
|---|---|---|---|---|---|
| Limit fermentation degree % | 84.28 | 84.99 | 85.42 | 84.33 | 85.01 |
| Wort gravity °P | 18 | 16 | 18 | 16 | 18 |
| Bitterness unit IBU | 14 | 13 | 14 | 13 | 15 |

**Table 3. Testing results of the healthy type light beer prepared in Embodiments 1∼5**

| Testing items | Embodiment 1 | Embodiment 2 | Embodiment 3 | Embodiment 4 | Embodiment 5 |
|---|---|---|---|---|---|
| Original wort gravity °P | 7.5°P | 7.5°P | 7.0°P | 7.5°P | 7.0°P |
| Alcohol gravity vol% | 4.0 | 4.0 | 4.0 | 4.0 | 4.0 |
| RDF % | 84.13 | 84.86 | 85.38 | 84.18 | 85.02 |
| Carbohydrate g/100g | 1.1 | 1.1 | 1.0 | 1.1 | 1.0 |
| Calorie kJ/100ml | 111 | 111 | 104 | 111 | 104 |

It is known from the data in Tables 1~3, the malt used in Embodiments 1-5 of the present application all adhere the set standards for malt and syrup in the healthy type light beer saccharified recipe, and it is known from the data in Tables 2∼3, based on the setting for the selected components in the recipe, rendering the wort gravity of the obtained wort being 16∼18°P, bitterness unit being 12~15 IBU, the wort limit fermentation degree ≥84%; the original wort gravity of the prepared healthy type light beer being 7.0∼7.5 °P, the alcohol gravity ≥4 vol%, the carbohydrate ≤1.1 g/100ml, the calorie ≤112 kJ/100ml, the mouth feel being refreshing and easy-drinking, having a low original gravity with normal beer taste.

For the healthy type light beer, the lower original wort gravity, the lower calorie and carbohydrate, the stronger the corresponding beer bland-tasting and the stronger watery sense will be; the higher RDF, under the same original wort gravity, the lower carbohydrate, the higher alcohol gravity will be; the alcohol can reduce lightness tasting and watery sense of the beer, and the beer is well-balanced. Therefore, under the original wort gravity of 7.0~7.5°P, by controlling the alcohol gravity ≥4.0, the effect of having a low original gravity with respect to mouth feel of the healthy type light beer can be achieved.

### Sensory analysis

Sensory analysis tests were conducted for the healthy type light beer obtained in above Embodiments 1~3, the results are seen in Table 4.

**Table 4. Sensory analysis results of the healthy type light beer products obtained in Embodiments 1∼3**

| Embodiments | Embodiment 1 | Embodiment 2 | Embodiment 3 |
|---|---|---|---|
| Evaluation results | ester flavor, refreshing and easy-drinking, having a low original gravity with normal beer taste | ester flavor, refreshing and easy-drinking, having a low original gravity with normal beer taste | ester flavor, refreshing and easy-drinking, having a low original gravity with normal beer taste |

It is known from the results in Table 4, the healthy type light beer provided by the Embodiments of the present application have characteristics of refreshing and easy-drinking, and have a low original gravity with normal beer taste. With the people's pursuit of healthy life style, in social life people wish to select some beers with low calorie and low carbohydrate without effecting the mouth feel, and the healthy type light beer provided by the Embodiments of the present application find the balance between "health" and "pleasure", so as to meet the consumers' need.

## Claims

1. A healthy type light beer, the beer is prepared by using a recipe comprising barley malt, wheat malt and caramel malt with addition of high real degree of fermentation syrup, through bottom fermentation method; the high real degree of fermentation syrup has a real degree of fermentation ≥ 89%; the beer is of an original wort gravity 7.0∼7.5 °P, an alcohol gravity ≥ 4 %vol, carbohydrate ≤ 1.2 g/100ml, calorie ≤ 112 kJ/100ml, RDF ≥ 84% and bitterness unit 5∼6.5 IBU; the beer is **characterized in that**, a content of total higher alcohols in the beer is 40∼60mg/L, a content of total ester in the beer is 10∼18mg/L.

2. The healthy type light beer according to claim 1, **characterized in that**, the barley malt is mainly malt of Australian malt and Canadian malt, and the barley malt accounts for 39%-54.5% of the total recipe, the wheat malt accounts for 5%∼10% of the total recipe, the caramel malt accounts for 0.5%∼1% of the total recipe, and the high real degree of fermentation syrup accounts for 40%∼50% of the total recipe.

3. The healthy type light beer according to claim 1, **characterized in that**, the high real degree of fermentation syrup is fructose corn syrup or glucose syrup.

4. A method for preparing a healthy type light beer according to claim 1, **characterized in that**, comprises the followings steps:
milling barley malt, wheat malt and caramel malt, then mixing at a ratio of material to water of 1:3∼1:4, and conducting two-stage saccharification at 62∼72 °C;
after the saccharification, filtering saccharified mash at 73±1 °C, to obtain clear wort, and then boiling the clear wort; during the boiling process, adding hops or hop extracts in batches; boiling and then adding the high RDF syrup of 40∼50%; boiling is continued, and then conducting whirlpool, cooling to 8~12 °C, conducting aeration and meanwhile pitching lager yeast to conduct fermentation, to obtain a cellar beer;
filtering the cellar beer then diluting to 7~7.5 °P, packaging and sterilizing, to obtain a healthy type light beer.

5. The method according to claim 4, **characterized in that**, the two-stage saccharification comprises a first stage saccharification of 80~100 min at 62~65 °C, and a second-stage saccharification of 20-40 min at 71-73 °C.

6. The method according to claim 4, **characterized in that**, the step adding hops or hop extracts in batches during the boiling process specifically comprises:
adding the hops or the hop extracts at the beginning of boiling, 15 min after boiling and 60 min after boiling.

7. The method according to claim 4, **characterized in that**, the hops or the hop extracts is bitter hops, aroma hops or dual-purpose hops.

8. The method according to claim 4, **characterized in that**, the step conducting aeration and pitching of lager yeast to conduct fermentation specifically comprises:
conducting aerating of the wort obtained after the whirlpool and cooling, controlling a dissolved oxygen in the wort at 10~14 mg/L, meanwhile pitching the lager yeast, and controlling yeast pitching rate at 20~30 million/ml, a main fermentation temperature at 8~12 °C, a maturation temperature at 8~13 °C, a fermentation time ≥ 15 days, a cold storage temperature -2 °C~0 °C, and a cold storage time ≥ 4 days.

## Patentansprüche

1. Gesundes Light-Bier, wobei das Bier durch Verwenden eines Rezepts, das Gerstenmalz, Weizenmalz und Karamellmalz mit Zugabe eines Sirups mit hohem wirklichem Vergärungsgrad (Real Degree of Fermentation, RDF) umfasst, durch ein Untergärungsverfahren hergestellt wird, der Sirup mit hohem wirklichem Vergärungsgrad einen wirklichen Vergärungsgrad ≥89 % aufweist, das Bier einen Stammwürzegehalt von 7,0-7,5 °P, einen Alkoholgehalt ≥4 Vol.-%, Kohlenhydrate ≤1,2 g/100 ml, Kalorien ≤112 kJ/100 ml, RDF ≥84 % und Bittereinheit 5-6,5 IBU aufweist, das Bier **dadurch gekennzeichnet ist, dass** ein Gehalt an gesamten höheren Alkoholen im Bier 40-60 mg/l beträgt, ein Gehalt an Gesamtester im Bier 10∼18 mg/l beträgt.

2. Gesundes Light-Bier nach Anspruch 1, **dadurch gekennzeichnet, dass** das Gerstenmalz hauptsächlich Malz aus australischem Malz und kanadischem Malz ist und das Gerstenmalz 39 %-54,5 % des Gesamtrezepts ausmacht, das Weizenmalz 5 %~10 % des Gesamtrezepts ausmacht, das Karamellmalz 0,5 %~1 % des Gesamtrezepts ausmacht und der Sirup mit hohem wirklichem Vergärungsgrad 40 %~50 % des Gesamtrezepts ausmacht.

3. Gesundes Light-Bier nach Anspruch 1, **dadurch gekennzeichnet, dass** der Sirup mit hohem wirklichem Vergärungsgrad Fructose-Maissirup oder Glucosesirup ist.

4. Verfahren zur Herstellung eines gesunden Light-Biers nach Anspruch 1, **dadurch gekennzeichnet, dass** es die folgenden Schritte umfasst:
Mahlen von Gerstenmalz, Weizenmalz und Karamellmalz, dann Mischen in einem Verhältnis von Material zu Wasser von 1:3∼1:4 und Durchführen von zweistufiger Verzuckerung bei 62~72 °C;
nach der Verzuckerung Filtern der verzuckerten Maische bei 73±1 °C, um klare Würze zu erhalten, und dann Kochen der klaren Würze; während des Kochprozesses schubweises Zugeben von Hopfen oder Hopfenextrakten; Kochen und dann Zugeben des Sirups mit hohem RDF von 40-50 %; Kochen wird fortgesetzt und dann Durchführen des Whirlpools, Kühlen auf 8~12 °C, Durchführen von Belüftung und derweil Anstellen der Lagerhefe zur Durchführung von Gärung, um ein Kellerbier zu erhalten;
Filtern des Kellerbiers, dann Verdünnen auf 7~7,5 °P, Abfüllen und Sterilisieren, um ein gesundes Light-Bier zu erhalten.

5. Verfahren nach Anspruch 4, **dadurch gekennzeichnet, dass** die zweistufige Verzuckerung eine Verzuckerung der ersten Stufe von 80-100 min bei 62-65 °C und eine Verzuckerung der zweiten Stufe von 20~40 min bei 71~73 °C umfasst.

6. Verfahren nach Anspruch 4, **dadurch gekennzeichnet, dass** der Schritt des schubweisen Zugebens von Hopfen oder Hopfenextrakten während des Kochprozesses speziell Folgendes umfasst:
Zugeben des Hopfens oder der Hopfenextrakte zu Beginn des Kochens, 15 min nach dem Kochen und 60 min nach dem Kochen.

7. Verfahren nach Anspruch 4, **dadurch gekennzeichnet, dass** der Hopfen oder die Hopfenextrakte Bitterhopfen, Aromahopfen oder Doppelzweckhopfen ist.

8. Verfahren nach Anspruch 4, **dadurch gekennzeichnet, dass** der Schritt des Durchführens von Belüftung und Anstellen von Lagerhefe, um Gärung durchzuführen, speziell Folgendes umfasst:
Durchführen von Belüftung der Würze, die nach dem Whirlpool und Kühlen erhalten wurde, Steuern eines gelösten Sauerstoffs in der Würze bei 10~14 mg/l, derweil Anstellen der Lagerhefe und Steuern der Hefeanstellrate bei 20~30 Millionen/ml, eine Hauptgärungstemperatur bei 8~12 °C, eine Reifungstemperatur bei 8~13 °C, eine Gärzeit ≥15 Tage, eine Kaltlagertemperatur von -2 °C~0 °C und eine Kaltlagerzeit ≥4 Tage.

## Revendications

1. Bière légère de type sain, la bière est préparée en utilisant une recette comprenant du malt d'orge, du malt de blé et du malt de caramel avec l'ajout d'un sirop à degré élevé réel de fermentation, par un procédé de fermentation basse ; le sirop à degré élevé réel de fermentation a un degré réel de fermentation ≥89 % ; la bière a une densité de moût d'origine de 7,0 ~ 7,5 °P, une densité d'alcool ≥4 % vol, des glucides ≤ 1,2 g/100 ml, des calories ≤ 112 kJ/100 ml, un RDF ≥ 84 % et une unité d'amertume de 5 ~ 6,5 IBU ; la bière est **caractérisée en ce que**, une teneur en alcools supérieurs totaux dans la bière est de 40 ~ 60 mg/L, une teneur totale d'ester dans la bière est de 10 - 18 mg/L.

2. Bière légère de type sain selon la revendication 1, **caractérisée en ce que** le malt d'orge est principalement du malt de malt australien et de malt canadien, et le malt d'orge représente 39 % ~ 54,5 % de la recette totale, le malt de blé représente 5% ~ 10% de la recette totale, le malt de caramel représente 0,5% ~ 1% de la recette totale et le sirop à degré élevé réel de fermentation représente 40% ~ 50% de la recette totale.

3. Bière légère de type sain selon la revendication 1, **caractérisée en ce que**, le sirop à degré élevé réel de fermentation est du sirop de maïs riche en fructose ou du sirop de glucose.

4. Procédé de préparation d'une bière légère de type sain selon la revendication 1, **caractérisé en ce qu'**il comprend les étapes suivantes :
la mouture du malt d'orge, du malt de blé et du malt de caramel, puis le mélange à un rapport de matière par rapport à l'eau de 1 : 3 - 1 : 4, et la réalisation d'une saccharification en deux étapes à 62 ~ 72 °C ;
après la saccharification, la filtration de la purée saccharifiée à 73 ± 1°C, pour obtenir un moût clair, puis l'ébullition du moût clair ; pendant le processus d'ébullition, l'ajout de houblon ou d'extraits de houblon par lots ; l'ébullition puis l'ajout du sirop à RDF élevé de 40 ~ 50 % ; l'ébullition est poursuivie, puis la réalisation d'un bain à remous, le refroidissement à 8 ~ 12 ° C, la réalisation de l'aération et pendant ce temps l'ensemencement de la levure de bière pour effectuer la fermentation, afin d'obtenir une bière de cave ;
la filtration de la bière de cave puis la dilution à 7 ~ 7,5 °P, l'emballage et la stérilisation, pour obtenir une bière légère de type sain.

5. Procédé selon la revendication 4, **caractérisé en ce que** la saccharification en deux étapes comprend une première étape de saccharification de 80 ~ 100 min à 62 ~ 65 °C et une seconde étape de saccharification de 20 ~ 40 min à 71 ~ 73 °C.

6. Procédé selon la revendication 4, **caractérisé en ce que** l'étape d'ajout de houblon ou d'extraits de houblon par lots lors de l'ébullition comprend notamment :
l'ajout des houblons ou des extraits de houblon en début d'ébullition, 15 min après l'ébullition et 60 min après l'ébullition.

7. Procédé selon la revendication 4, **caractérisé en ce que** le houblon ou les extraits de houblon sont des houblons amers, des houblons aromatiques ou des houblons à double usage.

8. Procédé selon la revendication 4, **caractérisé en ce que**, l'étape d'aération et d'ensemencement de la levure de bière pour effectuer la fermentation comprend notamment :
la réalisation d'une aération du moût obtenu après le bain à remous et le refroidissement, le contrôle d'un oxygène dissous dans le moût à 10 ~ 14 mg/L, en même temps l'ensemencement de la levure de bière et le contrôle du taux d'ensemencement de la levure à 20 ~ 30 millions/ml, une température de fermentation principale à 8 ~ 12 °C, une température de maturation à 8 ~ 13 °C, un temps de fermentation ≥ 15 jours, une température de stockage au froid de -2 °C ~ 0 °C et une durée de stockage au froid ≥ 4 jours.
